# EUROPEAN PATENT SPECIFICATION

(11) **EP 2 757 271 B1**
(45) Date of publication and mention of the grant of the patent: **24.02.2021**
(21) Application number: 14151682.3
(22) Date of filing: 17.01.2014
(51) Int. Cl.: F16B 2/22, E04G 21/24, E04G 21/28

(54) **A clip**
Klemme
Pince

(30) Priority: 22.01.2013 GB 201301062
(43) Date of publication of application: 23.07.2014
(73) Proprietor: Tiller, Steven, Spalding, Lincolnshire PE12 7DA (GB)
(72) Inventor: Tiller, Steven, Spalding, Lincolnshire PE12 7DA (GB)
(74) Representative: ip21 Ltd

(56) References cited:
- DE-A1- 19 951 457
- DE-A1-102009 015 498
- DE-U1- 20 215 656
- GB-A- 2 485 658

## Description

### Field of the Invention

The present invention relates to a clip. The clip is particularly for use on building sites to retain a covering sheet in the required position to protect elements of the site such as partially constructed walls or the like.

### Background to the Invention

In the building and construction industry, several different professions can often be working in close proximity to each other, either on the same site or often on the same building. For example, bricklayers, carpenters and electricians can each carry out their separate trades depending on the stage reached in the construction.

There is therefore a need firstly to coordinate the work but also to ensure that the risks of injury and accident are minimised. For example, where two people are working at different levels, an object can easily fall from the upper level onto the person working below. One aspect of this with which the current invention is particularly of concern is the danger arising where walls made of bricks, breezeblocks or the like are only partially constructed and due to conditions such as the weather, availability of personnel the state of the wall cannot be worked on.

For example, it happens quite often that the mortar used within a brick wall needs time to be able to dry before further layers of bricks can be laid on top. However, during the winter months the time period required for the mortar to set can be quite long. Moreover, there is a risk that frost can damage the mortar already present.

In such circumstances, to protect the mortar, it is common practice within the industry to cover the structure with a sheet which is made of hessian due to that material's toughness. The sheet is usually held down by bricks or other heavy objects readily to hand on site. As will be readily realised, this is dangerous, especially when the top of the wall on which the securing bricks sit is above head height. The bricks can easily fall off: perhaps because they are incorrectly placed, knocked off by passing workers or tipped off by the sheet in strong winds. Even if a falling brick causes no damage, it will quite probably be damaged in the fall rendering it unusable and requiring a relatively expensive replacement.

Document DE102009015498 describes a securing device having two arms joined by a cross-piece which is pushed over the top of a partially built wall, sandwiching a protective sheet therebetween.

Document GB2485658 discloses a device which, in the embodiment has two arms joined by an angled cross-piece to sandwich a sheet between the device and a wall.

Document DE20215656 discloses tensioning members, securable to a batten to secure a sheet to a wall through application of a compressive force.

DE19951457A1 discloses a covering for the upper side of brickwork. The covering has a U-shaped cross section.

The present invention therefore seeks to address the above problems and provide a means of retaining a sheet material on a wall.

### Summary of the Invention

According to the invention there is provided a retainer clip according to claim 1 for use in retaining a protective sheet of covering material on a wall made of brick or similar construction elements,
the retainer clip being formed of a resilient material such as metal or a plastics material and including a first and second arm, substantially parallel to each other,

said first and second arms being connected by a cross-piece maintaining a separation of the arms at a distance corresponding to the width of a standard brick or breezeblock and allowing the free ends of the arms to pass over the wall.

The resilient nature of the arms enables the clip to be pushed over the bricks and the sheet to be held in position, by slightly forcing the arms apart, the tension in the arms then acting to grip the sheet against the wall.

According to the invention, the first arm includes a stop member extending towards the second arm, which stop member in use rests on an upper surface of the wall and the sheet thereon and ensures the retainer clip is positioned correctly. The stop member assists in ensuring that the elements of the retainer clip which engage the wall engage a brick and not the mortar between adjacent bricks.

One or both arms advantageously has an at least partially ridged inner surface to assist engagement with a wall or wall covering and to resist movement of the clip.

The or each ridge in one embodiment has a square or rectangular cross-section. In a further embodiment the or each ridge has a triangular cross-section, joined to the arm along one edge of said triangle and especially advantageously the triangular cross-section is an isosceles triangle. This provides better grip with the covering material.

Optionally, a ridge has a roughened surface or is coated or otherwise covered with a material having a high coefficient of friction to enable a retainer clip to better grip a wall or a covering sheet.

Conveniently an arm includes a curved portion to define a wall-engaging region, limiting the area in contact with the wall and so increasing pressure and hence grip on material in that region.

Optionally, the end of an arm includes a gripping portion to enable a user to pull the arm away from a wall to move the retainer clip.

Advantageously, the cross-piece extends in a direction away from the arm to form a retention volume in which a mass, for example a standard house brick can be placed to assist in holding the retainer clip in place on the wall. The additional weight, which is safely deployed within the volume reduces the opportunity for movement of the clip.

### Brief Description of the Drawings

The invention is now described with reference to the accompanying drawings, which show by way of example only, five embodiments of a retainer clip. In the drawings:
Figure 1 is a perspective view of a first embodiment of a clip;

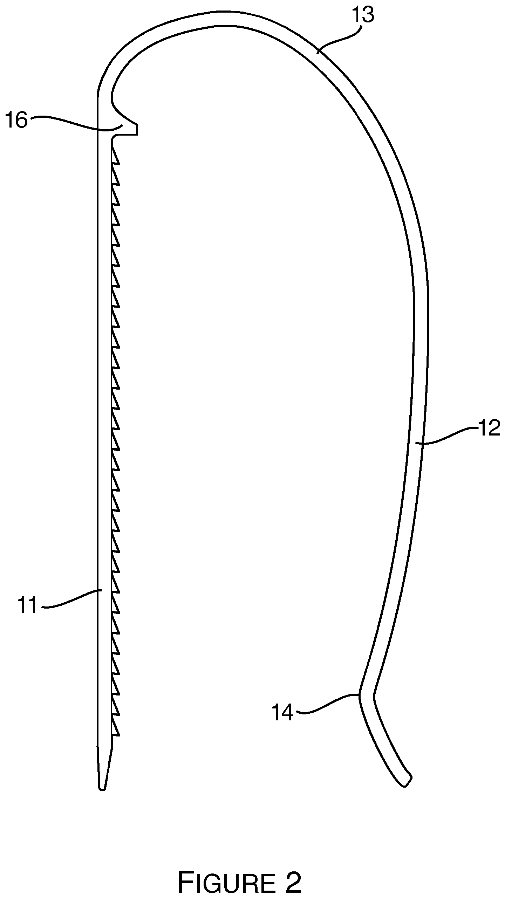

Figure 2 is a side view of the clip in figure 1;
Figure 3a illustrates the clip of figure 1 in use about the wall and figure 3b is an enlarged view of that shown in figure 3a;
Figure 4 illustrates an enlarged view of the gripping regions;
Figure 5 is a side view of a second embodiment of a clip;
Figure 6 is a perspective view of the embodiment of figure 5; and
Figures 7a to 7c illustrate third to fifth embodiments of a clip. However, the clip of figure 7a is not covered by the present invention.

### Detailed Description of the Invention

The present invention is concerned with improved means of retaining a sheet of protective material on a wall. Usually this is carried out when it is expected that a part-constructed wall needs to be protected, for example overnight. Often the mortar within the wall has not had a chance to fully set and, for example, is susceptible to damage by frost or impact.

The sheet of material is therefore placed over the wall to provide the protection. Typically, the material such as hessian, is hard wearing and abrasion resistant which has the additional advantage of allowing water to evaporate away from the wall. In order to prevent or hinder the sheet from falling off or blowing away, weights such as bricks are often laid on top of the sheet. This results in a risk to the safety of personnel on the site as the bricks can easily be knocked off the wall and onto a person below. However, even if there is no such accidental injury, the sheet is then susceptible to being removed.

The present invention seeks to provide a relatively inexpensive device to hold the sheet in place without recourse to bricks or other weights. The device is relatively inexpensive to manufacture, is easily transportable and could be part of the standard equipment on a construction site.

In its broadest embodiment, a clip is provided which fits over a wall and sheet material to hold the sheet material in contact with the wall. The clip can be readily removed when required and possibly reused. Given the force typically exerted by the clip on the sheet and brickwork it is envisaged that clips be used at a separation of around 1200 -1500mm, although this distance will be influenced by prevailing weather conditions, the exposure of the wall to those conditions, etc.

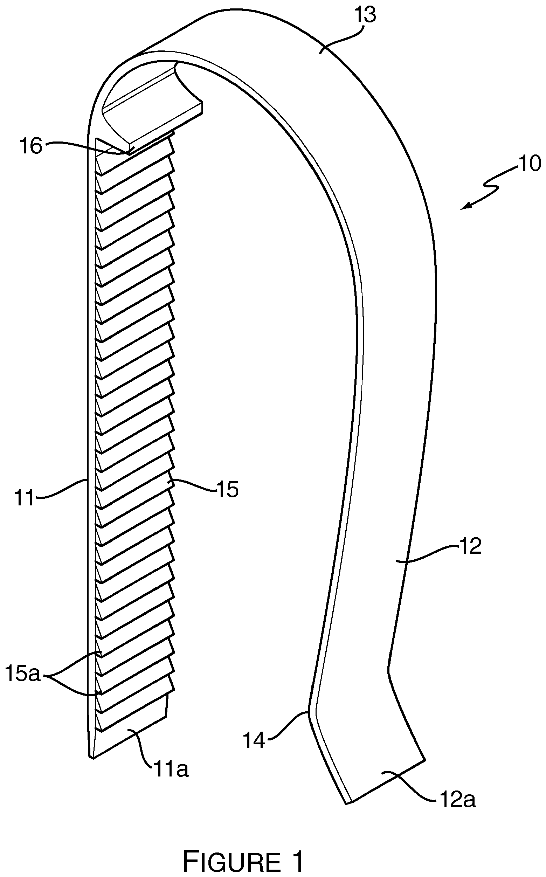

Turning initially to figure 1, this illustrates a first embodiment of a clip 10. The clip 10 has a first arm 11 and a second arm 12 connected together by the bridge element 13. The clip 10 is formed of a resilient material such as steel or a plastics material which allows a user to apply pressure to increase the distance between the ends 11a, 12a of the arms 11, 12 and enabling the clip 10 to be passed over the top of the wall. Once the clip 10 is in the required position, pressure is released. The resilience of the clip 10 then causes the ends 11a, 12a to move towards each other and grip the sheet to the wall.

The dimensions of the clip 10 are determined by the use of the clip 10 and by the material from which the clip 10 is formed. A typical dimension for the length of an arm 11, 12 is around 200 to 215mm, preferably approximately 225mm.

The second arm 12 has a curved configuration, a portion of the second arm bowing away from the first arm 11. This enables a stronger force to be exerted by the clip 10 on the sheet material, as the arm 12 contacts the material only in the heel region 14. The force exerted by the arm 12 is therefore concentrated to act over a small area and hence the local pressure on the material is increased and the material held is position more strongly. The end 12a of the arm 12 is bent away from the arm 11, thus forming the region 14 into a heel, to facilitate pulling the two arms 11, 12 apart. In further embodiments, not illustrated, additional means for a user to grip a clip are provided.

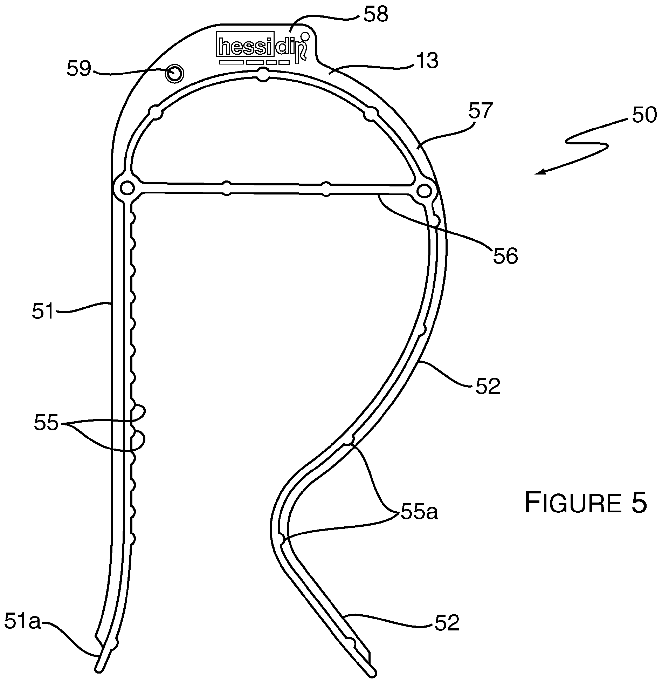

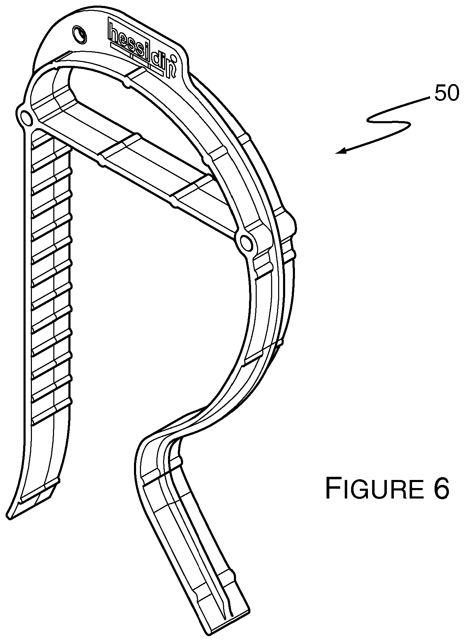

A further feature to enhance the grip of a clip 10 is also shown in figure 1. The first arm 11 is provided with a ridged inner surface 15 the ridges extending over at least part of the inner surface 15 which engages a sheet or brickwork. In the illustrated embodiment of figure 1, the ridges are moulded to be integral with the material from which the arm 11 is formed. The individual ridges 15a can have a number of cross-sectional shapes. One preferred shape is that of a triangle in which each triangular ridge is joined to the arm along an edge of the triangle. In use therefore the external apex of each triangle bites into the sheet and prevents or hinders the clip from moving. Other shapes of ridge can be contemplated such as having a rectangular or square cross-section. Additionally, as is illustrated in the second embodiment of clip of figures 5 and 6, the ridges can have a curved surface to engage the sheet which will cause less damage to the sheet in the long term.

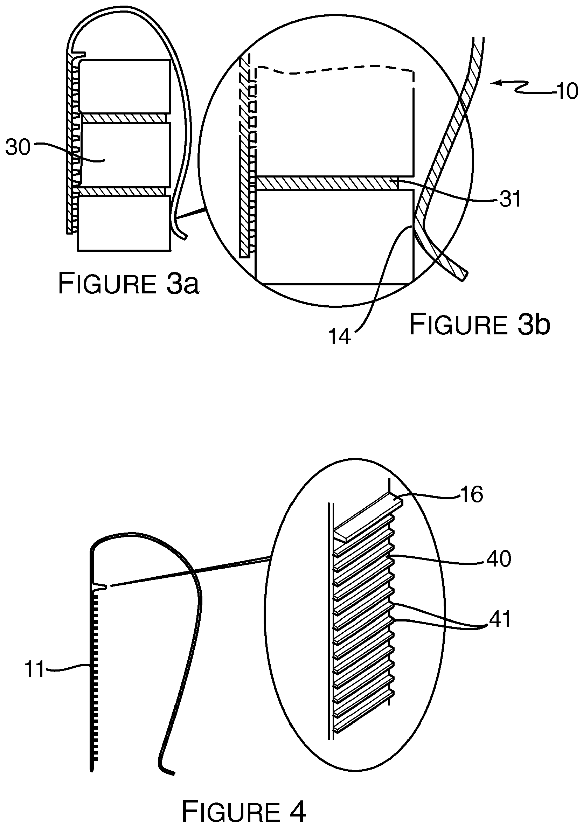

In order to ensure that the clip 10 is pushed the correct distance onto the brickwork a stop shoulder 16 is provided which engages the sheet on top of the wall and prevents the clip being pushed further onto the wall. The location of the stop shoulder 16 is determined by the nature of the wall on which the clip is to be used. The location is such that the heel 14 is in contact with a brick 30 (see figures 3a, 3b), often located within a layer second or third down from the top layer, and not the mortar 31. This ensures that the heel 14 does not damage the mortar 31 before the mortar is fully set.

In figure 4 an alternative to moulded ridges as per figure 1 is illustrated. In this embodiment a strip of material 40 having a roughened surface 41 is fixed by an adhesive to the surface of the arm 11. Other features of the clip are as shown in the earlier embodiment.

Figures 5 and 6 illustrate a second embodiment of a clip 50. The clip 50 has a number of features in common with the clip 10 of the first embodiment, in that two arms 51, 52 are connected together by means of a bridge element 13. The stop shoulder 56 extends from the first arm 51 to the second arm 52 which firstly strengthens the clip 50 and secondly increases the surface area of the clip 50 in contact with the sheet of material on the brick. Secondly, a support ridge 57 runs centrally along the outer edge of the clip 50 and provides additional strength to the clip 50 and also increases the force exertable by the clip 50 on the sheet when in use.

A handle 58 aids in the placement and removal of the clip 50 onto and from brickwork. Moreover, an aperture 59 within the handle 58 can be utilised in the storage of the clip 50 enabling the clip 50 to be hung up.

To aid in placement of the clip 50 in its in-use position, the curvature of the end of the arm 52 can be made such that the end 52a subtends an angle of around 90° with the rest of the arm 52. The force exerted on the arm 52 by the brickwork as the clip 50 is positioned acts initially on the end 52a and a component of that force separates the arms 51, 52 from each other, facilitating placement of the clip 50.

The curvature of the end region 51a of the arm 51 acts in a similar fashion.

The end 52a has an additional function of restricting the movement of the sheet over the brickwork during, for example, high winds so minimising damage to the sheet or interfering with movement of personnel around the brickwork.

The second embodiment also exemplifies the use of ridges 55 which do not have apices to engage the sheet, but nevertheless act to aid retention of the sheet. The additional ridges 55a shown assist in the production of a clip 50 in aiding removal of a clip 50 from a mould tool.

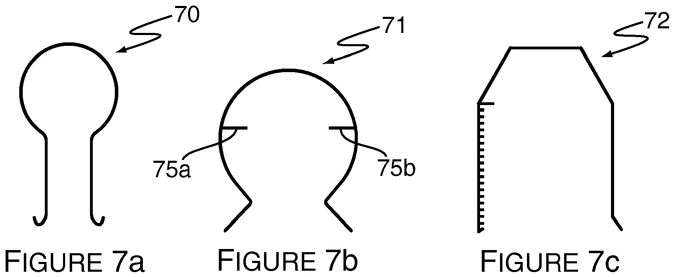

Figures 7a to 7c illustrate alternative embodiments of clip 70, 71, 72 in which the arms of the clip 70, 71, 72 have different shapes. The clip 71 of figure 7b can be seen to have two stop shoulders 75a, 75b.

In a further embodiment, not illustrated, the clip can include means to contain and retain a mass such as a brick or the like. The additional mass would enhance the retention of the sheet against the wall and reduce the chance of the clip/sheet coming loose. Due to the mass being contained, the risk of the mass being knocked from the clip and so causing injury or damage is virtually eliminated.

Without being limiting, the containing means can comprise an extension of the clip, in a direction away from the arms of the clip, of the cross-piece to form sides between which a brick can sit. Additionally, and for further safety the opposed edges of these sides can be joined by a further wall, in effect forming a dish or bowl. Alternatively, the clip may also additionally simply extend to form retaining features without these features being joined to the other sides. The walls may be removable attached to the clip, for situating where additional weighting is not required.

It will of course be understood that the invention is not limited to the specific details described herein, which are given by way of example only, and that various modifications and alterations are possible within the scope of the append claims.

## Claims

1. A retainer clip (10) for use in retaining a protective sheet of covering material on a wall made of brick or similar construction elements,
the retainer clip (10) being formed of a resilient material such as metal or a plastics material and including a first and second arm (11, 12), substantially parallel to each other,
said first and second arms (11, 12) being connected by a cross-piece (13) maintaining a separation of the arms at a distance allowing the free ends of the arms to pass over the wall,
the first arm (11) including a stop member (16) extending towards the second arm, which stop member (16) in use rests on an upper surface of the wall and the sheet thereon and ensures the retainer clip (10) is positioned correctly, wherein an arm includes a curved portion to define a wall-engaging region (14), **characterised in that** the end of the curved portion of an arm extends away from the other arm and, in use, from a wall.

2. A retainer clip (10) according to claim 1, wherein the stop member extends to and is joined to the second arm (12).

3. A retainer clip according to either of claims 1 or 2, wherein one or both arms has an at least partially ridged inner surface (15a).

4. A retainer clip according to claim 3 wherein the or each ridge has a square or rectangular cross-section.

5. A retainer clip according to claim 3 wherein the or each ridge has a triangular cross-section, joined to the arm along one edge of said triangle.

6. A retainer clip according to claim 5, wherein the triangular cross-section is an isosceles triangle.

7. A retainer clip according to claim 3, wherein the or each ridge (55) has a curved surface.

8. A retainer clip according to claims 3 - 7, wherein a ridge has a roughened surface.

9. A retainer clip according to claims 3 - 8 wherein a ridge is coated or otherwise covered with a material having a high coefficient of friction.

10. A retainer clip according to any preceding claim, wherein the cross-piece extends in a direction away from the arm to form a retention volume in which a mass, such as a standard house brick can be placed.

11. A retainer clip according to any preceding claim, wherein the end of the curved portion subtends an angle of around 90° with the rest of the arm.

12. A retainer clip according to any preceding claim, wherein the width of an arm is substantially less than the length of the arm.

13. A method of retaining a protective sheet of covering material on a wall made of brick or similar construction elements, the method comprising placing a sheet to cover over the top of a wall,
selecting a retaining clip, said clip the retainer clip (10) being formed of a resilient material such as metal or a plastics material and including a first and second arm (11, 12), substantially parallel to each other,
said first and second arms (11, 12) being connected by a cross-piece (13) maintaining a separation of the arms at a distance corresponding to the width of a standard brick or breezeblock and allowing the free ends of the arms to pass over the wall,
the first arm (11) including a stop member (16) extending towards the second arm, which stop member (16) in use rests on an upper surface of the wall and the sheet thereon and ensures the retainer clip (10) is positioned correctly,
wherein an arm includes a curved portion to define a wall-engaging region (14), the curved end portion on an arm extending away from the other arm and, in use, from a wall.
and placing the clip over the sheet and top of the wall such that the first and second arms are on opposite sides of the wall with the sheet retained therebetween.

## Patentansprüche

1. Halteklammer (10) zur Verwendung beim Halten einer Schutzfolie aus Abdeckmaterial an einer aus Ziegeln oder ähnlichen Bauelementen hergestellten Wand,
wobei die Halteklammer (10) aus einem elastischen Material wie Metall oder einem Kunststoffmaterial gebildet ist und einen ersten und einen zweiten Arm (11, 12) aufweist, die im Wesentlichen parallel zueinander sind,
wobei der erste und der zweite Arm (11, 12) durch ein Querstück (13) verbunden sind, das eine Trennung der Arme in einem Abstand aufrechterhält, der es den freien Enden der Arme ermöglicht, über die Wand zu laufen,
der erste Arm (11) ein Anschlagelement (16) aufweist, das sich in Richtung des zweiten Arms erstreckt, wobei das Anschlagelement (16) im Gebrauch auf einer oberen Fläche der Wand und der darauf befindlichen Folie ruht und sicherstellt, dass die Halteklammer (10) korrekt positioniert ist,
wobei ein Arm einen gekrümmten Abschnitt aufweist, um einen Wandeingriffsbereich (14) zu definieren,
**dadurch gekennzeichnet, dass** das Ende des gekrümmten Abschnitts eines Arms sich von dem anderen Arm und im Gebrauch von einer Wand weg erstreckt.

2. Halteklammer (10) nach Anspruch 1, wobei sich das Anschlagelement bis zum zweiten Arm (12) erstreckt und mit diesem verbunden ist.

3. Halteklammer nach einem der Ansprüche 1 oder 2, wobei einer oder beide Arme eine zumindest teilweise geriffelte Innenfläche (15a) aufweisen.

4. Halteklammer nach Anspruch 3, wobei der oder jeder Grat einen quadratischen oder rechteckigen Querschnitt aufweist.

5. Halteklammer nach Anspruch 3, wobei der oder jeder Grat einen dreieckigen Querschnitt aufweist, der entlang einer Kante des Dreiecks mit dem Arm verbunden ist.

6. Halteklammer nach Anspruch 5, wobei der dreieckige Querschnitt ein gleichschenkliges Dreieck ist.

7. Halteklammer nach Anspruch 3, wobei der oder jeder Grat (55) eine gekrümmte Oberfläche aufweist.

8. Halteklammer nach einem der Ansprüche 3 bis 7, wobei ein Grat eine aufgeraute Oberfläche aufweist.

9. Halteklammer nach einem der Ansprüche 3 bis 8, wobei ein Grat mit einem Material mit hohem Reibungskoeffizienten beschichtet oder anderweitig bedeckt ist.

10. Halteklammer nach einem der vorhergehenden Ansprüche, wobei sich der Quersteg in einer Richtung weg vom Arm erstreckt, um ein Rückhaltevolumen zu bilden, in das eine Masse, wie z. B. ein Standardhausziegel, eingelegt werden kann.

11. Halteklammer nach einem der vorhergehenden Ansprüche, wobei das Ende des gekrümmten Abschnitts einen Winkel von etwa 90° mit dem Rest des Arms einschließt.

12. Halteklammer nach einem der vorhergehenden Ansprüche, wobei die Breite eines Arms wesentlich geringer ist als die Länge des Arms.

13. Verfahren zum Halten einer Schutzfolie aus Abdeckmaterial an einer aus Ziegeln oder ähnlichen Bauelementen hergestellten Wand, wobei das Verfahren das Anbringen einer abzudeckenden Folie über der Oberseite einer Wand,
und das Auswählen einer Halteklammer umfasst, wobei die Halteklammer (10) aus einem elastischen Material wie Metall oder einem Kunststoffmaterial gebildet ist und einen ersten und einen zweiten Arm (11, 12) umfasst, die im Wesentlichen parallel zueinander sind,
wobei der erste und der zweite Arm (11, 12) durch ein Querstück (13) verbunden sind, das eine Trennung der Arme in einem Abstand aufrechterhält, der der Breite eines Standardziegels oder Briseblocks entspricht und es den freien Enden der Arme ermöglicht, über die Wand zu laufen,
der erste Arm (11) ein Anschlagelement (16) aufweist, das sich in Richtung des zweiten Arms erstreckt, wobei das Anschlagelement (16) im Gebrauch auf einer oberen Fläche der Wand und der darauf befindlichen Folie ruht und sicherstellt, dass die Halteklammer (10) korrekt positioniert ist,
wobei ein Arm einen gekrümmten Abschnitt aufweist, um einen Wandeingriffsbereich (14) zu definieren, wobei sich der gekrümmte Endabschnitt an einem Arm von dem anderen Arm und im Gebrauch von einer Wand weg erstreckt,
und wobei die Klammer über der Folie und der Oberseite der Wand so platziert wird, dass sich der erste und der zweite Arm auf gegenüberliegenden Seiten der Wand befinden, wobei die Folie dazwischen gehalten wird.

## Revendications

1. Pince de retenue (10) destinée à être utilisée pour retenir une feuille protectrice de matériau de revêtement sur un mur en brique ou en éléments de construction similaires,
la pince de retenue (10) étant formée d'un matériau élastique tel que du métal ou une matière plastique et comprenant un premier et un deuxième bras (11, 12), sensiblement parallèles l'un à l'autre,
lesdits premier et deuxième bras (11, 12) étant reliés par une traverse (13) maintenant une séparation des bras à une distance permettant aux extrémités libres des bras de passer par-dessus le mur,
le premier bras (11) comprenant un élément d'arrêt (16) s'étendant vers le deuxième bras, lequel élément d'arrêt (16), en utilisation, repose sur une surface supérieure du mur et de la feuille sur celui-ci et assure que la pince de retenue (10) est positionnée correctement,
dans lequel un bras comprend une partie incurvée pour définir une région de mise en prise avec le mur (14),
**caractérisé en ce que** l'extrémité de la partie incurvée d'un bras s'étend à l'écart de l'autre bras et, en utilisation, d'un mur.

2. Pince de retenue (10) selon la revendication 1, dans laquelle l'élément d'arrêt s'étend jusqu'au deuxième bras (12) et est relié à celui-ci.

3. Pince de retenue selon l'une des revendications 1 ou 2, dans laquelle un ou les deux bras présentent une surface intérieure au moins partiellement striée (15a).

4. Pince de retenue selon la revendication 3, dans laquelle la ou chaque arête a une section transversale carrée ou rectangulaire.

5. Pince de retenue selon la revendication 3, dans laquelle la ou chaque arête présente une section transversale triangulaire, reliée au bras le long d'un bord dudit triangle.

6. Pince de retenue selon la revendication 5, dans laquelle la section transversale triangulaire est un triangle isocèle.

7. Pince de retenue selon la revendication 3, dans laquelle la ou chaque arête (55) a une surface incurvée.

8. Pince de retenue selon les revendications 3 à 7, dans laquelle une arête présente une surface rugueuse.

9. Pince de retenue selon les revendications 3 à 8, dans laquelle une arête est revêtue ou autrement recouverte d'un matériau ayant un coefficient de frottement élevé.

10. Pince de retenue selon l'une quelconque des revendications précédentes, dans laquelle la traverse s'étend dans une direction opposée au bras pour former un volume de retenue dans lequel une masse, telle qu'une brique de maison standard, peut être placée.

11. Pince de retenue selon l'une quelconque des revendications précédentes, dans laquelle l'extrémité de la partie incurvée sous-tend un angle d'environ 90° avec le reste du bras.

12. Pince de retenue selon l'une quelconque des revendications précédentes, dans laquelle la largeur d'un bras est sensiblement inférieure à la longueur du bras.

13. Procédé de retenue d'une feuille protectrice de matériau de revêtement sur un mur en briques ou en éléments de construction similaires, le procédé comprenant la mise en place d'une feuille à recouvrir par-dessus le dessus d'un mur, et
le choix d'une pince de retenue, ladite pince de retenue (10) étant formée d'un matériau élastique tel que du métal ou une matière plastique et comprenant un premier et un deuxième bras (11, 12), sensiblement parallèles l'un à l'autre,
lesdits premier et deuxième bras (11, 12) étant reliés par une traverse (13) maintenant une séparation des bras à une distance correspondant à la largeur d'une brique ou d'un parpaing standard et permettant aux extrémités libres des bras de passer par-dessus le mur,
le premier bras (11) comprenant un élément d'arrêt (16) s'étendant vers le deuxième bras, lequel élément d'arrêt (16), en utilisation, repose sur une surface supérieure du mur et de la feuille sur celui-ci et assure que la pince de retenue (10) est positionnée correctement,
dans lequel un bras comprend une partie incurvée pour définir une région de mise en prise avec le mur (14), la partie d'extrémité incurvée sur un bras s'étendant à l'écart de l'autre bras et, en utilisation, d'un mur,
et plaçant la pince sur la feuille et le dessus du mur de sorte que les premier et deuxième bras sont sur des côtés opposés du mur avec la feuille retenue entre eux.
